# FASCICULE DE BREVET EUROPEEN

(11) **EP 2 320 618 B1**
(45) Date de publication et mention de la délivrance du brevet: **11.02.2015**
(21) Numéro de dépôt: 10188794.1
(22) Date de dépôt: 26.10.2010
(51) Int. Cl.: H04L 29/06, H04W 12/02

(54) **Procédé, terminal et équipement informatique de sécurisation des services de messagerie**
Verfahren, Endgerät und elektronische Datenverarbeitungsanlage zur Sicherung von Messaging-Diensten
Method, terminal and computer device for securing messaging services

(30) Priorité: 05.11.2009 FR 0905318
(43) Date de publication de la demande: 11.05.2011
(73) Titulaire: Société Française du Radiotéléphone, 75008 Paris (FR)
(72) Inventeur: Teimoorzadeh, Kourosh, 28130, Bouglainval (FR)
(74) Mandataire: Debay, Yves

(56) Documents cités:
- EP-A1- 1 569 482
- WO-A1-2007/018476
- MOHSEN TOORANI ET AL: "SSMS - A secure SMS messaging protocol for the m-payment systems", COMPUTERS AND COMMUNICATIONS, 2008. ISCC 2008. IEEE SYMPOSIUM ON, IEEE, PISCATAWAY, NJ, USA, 6 juillet 2008 (2008-07-06), pages 700-705, XP031321358, ISBN: 978-1-4244-2702-4
- HASSINEN M: "Java based Public Key Infrastructure for SMS Messaging", INTERNET CITATION, 28 avril 2006 (2006-04-28), pages 88-93, XP002532212, ISBN: 978-0-7803-9521-3 Extrait de l'Internet: URL:http://ieeexplore.ieee.org/stamp/stamp .jsp?tp=&arnumber=1684350&isnum ber=35470 [extrait le 2009-06-15]

## Description

La présente invention concerne le domaine des télécommunications. Elle concerne plus particulièrement un procédé, un terminal et un équipement informatique intégré au réseau de télécommunication permettant de renforcer le niveau de sécurité des services de messagerie d'un opérateur.

Aujourd'hui de plus en plus de transactions bancaires se font par SMS. Il existe donc un réel besoin de sécurité pour exploiter efficacement de tels services de messagerie. Le problème est qu'aujourd'hui les communications via SMS sont des communications basiques avec très peu de sécurité.

Dans ce contexte, il est intéressant de proposer une solution permettant de protéger les données des usagers en renforçant les niveaux de sécurité des messageries.

EP 1 569 482 A1 (NAGRACARD SA [CH]) 31 août 2005, divulgue un méthode de sécurisation de la transmission de messages courts SMS via un réseau mobile afin d'empêcher leur capture par des tiers.

La présente invention a pour but de supprimer certains inconvénients de l'art antérieur en proposant un procédé d'échange de messages sécurisés utilisant des données contextuelles du réseau opérateur.

Ce but est atteint en proposant un procédé d'échange de messages sécurisés entre au moins deux terminaux (USER A, USER B) capable de communiquer avec un réseau de télécommunication cellulaire 2G/3G appartenant à au moins deux opérateurs (Oper A, Oper B), lesdits terminaux (USER A, USER B) comprenant chacun un module métier (MM utilisateur USER A, MM utilisateur USER B) apte à gérer et générer des clefs publique et privée, ledit réseau de télécommunication cellulaire 2G/3G comprenant deux modules de messagerie (M Mess A, M Mess B) appartenant chacun à un opérateur (Oper A, Oper B), deux modules métier (M ME A, M ME B) aptes à gérer et générer des clefs publique et privée, le procédé étant caractérisé en ce qu'il comporte :
a) une étape de génération de clefs de chiffrement publique et privée à partir des donnés contextuelles du contexte PDP extraites par le module métier (MM utilisateur USER A) du réseau auquel est connecté le premier utilisateur du terminal (USER A),
b) une étape de génération de même clefs de chiffrement publique et privée à partir des donnés contextuelles du contexte PDP extraites par le module métier (M ME A) du réseau auquel est connecté le premier utilisateur de l'opérateur (Oper A) et de transmission de la clef publique (CPu A) au module de messagerie (M Mess B) de l'opérateur B,
c) une étape de génération de clefs de chiffrement publique et privée à partir des donnés contextuelles du contexte PDP extraites par le module métier (MM utilisateur USER B) du réseau auquel est connecté le second utilisateur du terminal (USER B),
d) une étape de génération de même clefs de chiffrement publique et privée à partir des donnés contextuelles du contexte PDP extraite par le module métier (MM utilisateur B) du réseau de l'opérateur (Oper B) et de transmission de la clef publique (CPu B) au module de messagerie (M Mess A) de l'opérateur A,
e) une étape de chiffrement du message par le terminal (USER A) avec la clef de chiffrement publique générée à l'étape a)
f) une étape de déchiffrement du message par le module de messagerie (M Mess A) de l'opérateur (Oper A) avec la clef de chiffrement privée du module métier (M ME A) générée à l'étape b)
g) une étape de chiffrement du message par le module de messagerie (M Mess A) de l'opérateur (Oper A) avec la clef de chiffrement publique du module métier (M ME B)
h) une étape de déchiffrement du message par le terminal (USER B) avec sa clef de chiffrement privée.

Selon une autre particularité, le réseau de télécommunication cellulaire 2G/3G appartient au même opérateur, le module métier (MM utilisateur B) est supprimé, l'étape de génération de clefs de chiffrement publique et privée à partir des donnés contextuelles du contexte PDP du réseau par le module métier (MM utilisateur USER B) du terminal (USER B) est supprimée.

Selon une autre particularité, les étapes de génération des clefs publiques et clefs privées comprennent un enrichissement desdites clefs par au moins un certificat métier.

Selon une autre particularité, les étapes de génération des clefs publiques et clefs privées comprennent un enrichissement desdites clefs par le profil de l'utilisateur.

Selon une autre particularité, les étapes de génération des clefs publiques et clefs privées comprennent un enrichissement desdites clefs par un profil de service.

Un autre but est atteint en proposant un terminal, comprenant une carte SIM, au moins un espace mémoire et un module d'authentification en communication avec la carte SIM et le réseau de télécommunication cellulaire 2G/3G, ledit module d'authentification étant capable d'établir une session avec le réseau de télécommunication cellulaire 2G/3G, ledit terminal étant apte à communiquer avec un réseau de télécommunication cellulaire 2G/3G et à envoyer des messages sécurisés vers au moins un autre terminal, ledit terminal étant caractérisé en ce qu'il comprend :
- un module métier en communication avec le module d'authentification, la carte SIM et l'espace mémoire capable de générer des clefs publique et privée (CPu, CPr) à partir des données contenues dans la carte SIM et de les stocker dans la zone mémoire,
- un applicatif métier (API ME) de gestion de la messagerie sécurisé en communication avec la carte SIM et la zone mémoire, capable de générer un message, de lire les clefs de chiffrement publique et privée (CPu, CPr) dans ladite zone mémoire et de chiffrer ledit message avec ladite clef publique ou de déchiffrer ledit message avec ladite clef privée de chiffrement.

Selon une autre particularité, le module métier du terminal enrichit les clefs de chiffrement avec au moins un certificat métier.

Selon une autre particularité, le module métier du terminal enrichit les clefs de chiffrement avec le profil de l'utilisateur.

Selon une autre particularité, le module métier du terminal enrichit au moins une des clefs de chiffrement avec un profil de service.

Un autre but est atteint en proposant un équipement informatique de gestion de messages sécurisés d'un réseau de télécommunication cellulaire 2G/3G comprenant un module de messagerie (M Mess), une base de données (RADIUS) et un module métier (M ME), ladite base de donnée (RADIUS) étant en communication avec ledit module de messagerie et le module métier (M ME), ledit module métier (M Me) permettant d'extraire du contexte réseau fourni par la base de données (RADIUS) les données permettant de générer des clefs publique et privée puis de communiquer lesdites clefs publique et privée à ladite base de données (RADIUS), ledit module de messagerie (M Mess) permettant d'envoyer une requête demandant les clefs de chiffrement publique et privée à la base de données (RADIUS) et permettant de chiffrer et déchiffrer les messages à envoyer avec les clefs de chiffrement fournies par la base de données (RADIUS)

Selon une autre particularité, le module métier (M ME) de l'équipement informatique de gestion de messages sécurisés d'un réseau de télécommunication cellulaire 2G/3G est intégré à la base de données (RADIUS).

Selon une autre particularité, la base de données (RADIUS) de l'équipement informatique de gestion de messages sécurisés d'un réseau de télécommunication cellulaire 2G/3G est intégrée au module de messagerie (M Mess).

Selon une autre particularité, le module métier (M ME) de l'équipement informatique de gestion de messages sécurisés d'un réseau de télécommunication cellulaire 2G/3G enrichit les données issues du contexte réseau avec au moins un certificat métier.

Selon une autre particularité, le module métier (M ME) de l'équipement informatique de gestion de messages sécurisés d'un réseau de télécommunication cellulaire 2G/3G enrichit les données issues du contexte réseau avec le profil de l'utilisateur.

Selon une autre particularité, le module métier (M ME) de l'équipement informatique de gestion de messages sécurisées d'un réseau de télécommunication cellulaire 2G/3G enrichit les données issues du contexte réseau avec un profil de service.

D'autres particularités et avantages de la présente invention apparaîtront plus clairement à la lecture de la description ci-après, faite en référence aux dessins annexés, dans lesquels :
- la figure 1 représente un schéma du réseau dans le cas d'échange de messages sécurisés intra-opérateur,
- la figure 2 représente un schéma du réseau dans le cas d'échange de messages sécurisé inter-opérateur,
- la figure 3 représente un schéma des échanges de données entre les différents éléments du réseau dans le cas de communications intra opérateur,
- la figure 4 est un exemple de réalisation d'un terminal présentant les différents modules ainsi que les échanges de paramètres.

L'invention va à présent être décrite en référence aux figures précédemment citées.

Dans le présent document, le terme " message " représente indifféremment un SMS (Short Message System), un MMS (Multimedia Message System), ou un courrier électronique.

De même le terme "terminal" représente indifféremment un téléphone mobile, un PDA (Personal Digital Assistant), un ordinateur relié au réseau ou tout autre moyen d'accès.

L'invention proposée permet de renforcer le niveau de sécurité des services de messagerie d'un opérateur, dans un réseau de télécommunication cellulaire 2G/3G, afin de sécuriser les données privées des abonnés.

Un réseau de télécommunication cellulaire 2G/3G est, par exemple, du type GSM (Global System for Mobile Communications), GPRS (Global Packet Radio Service), UMTS (Universal Mobile Telecommunications System) ou HSDPA (High Speed Downlink Packet Access).

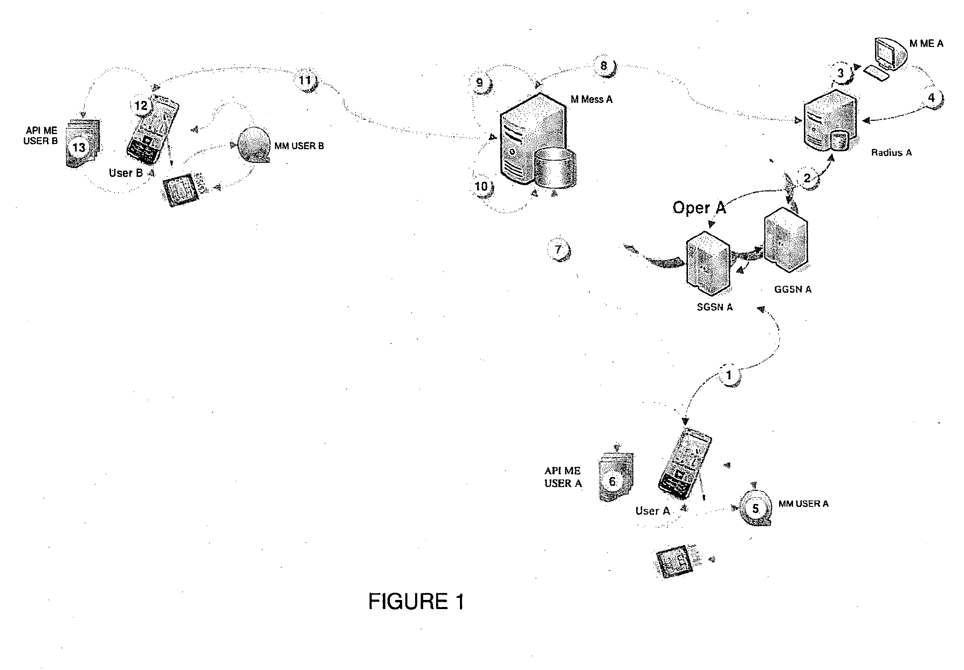

La figure 1 présente un réseau de télécommunication cellulaire 2G/3G, à l'intérieur d'un même opérateur A, comprenant par exemple au moins des passerelles (GGSN A et SGSN A) qui assurent le routage des paquets.

La passerelle (SGSN A) (Serving GPRS Support Node) permet notamment l'acheminement des données dans le réseau GPRS et gère par exemple l'interface avec le réseau de paquets externes via la passerelle GGSN A (Gateway GPRS Support Node) identifiée par son APNAME (Access Point Name), également désigné par APN :
- une base de données (RADIUS A) (Remote Authentication Dial In User Service) permettant de centraliser des données d'identification d'un réseau A,
- un module métier (MM A) qui permet de générer des clefs publiques et privées via un algorithme d'un réseau A,
- un module de messagerie (M Mess A) du réseau A qui permet d'assurer le traitement des messages échangés par le réseau A avec le terminal (USER A).

Le module de messagerie (M Mess A) est en communication avec la base de données (RADIUS A) et les terminaux (USER A, USER B) du même réseau. Le module de messagerie (M Mess A) comprend par exemple les centres de services SMSC (Short Message Service Center), MMSC (Multimédia Message Service Center), Email SRV (Email Service)...

Le procédé d'échange de messages sécurisés comprend plusieurs étapes.

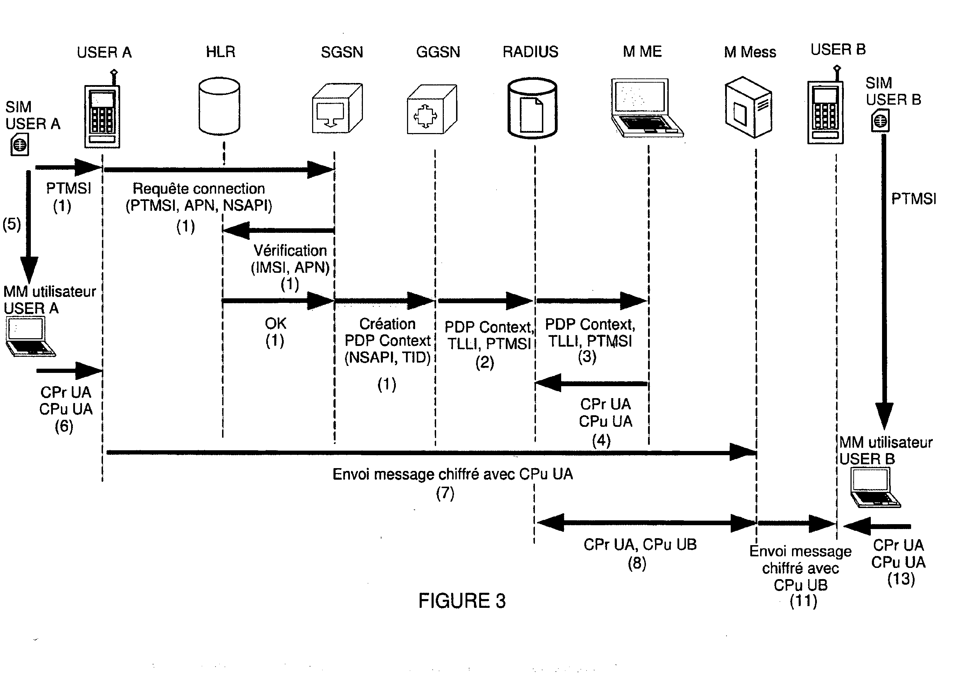

En se référant aux figures 1 et 3, une première étape (1) établit un contexte d'échange de données unique entre le terminal mobile (USER A) et le réseau.

Pour envoyer un message, le terminal mobile (USER A) va transmettre au serveur SGSN A une requête de connexion.

Cette requête de connexion contient d'une part un paramètre (par ID) identifiant l'utilisateur et d'autre part un paramètre de connexion (par con) nécessaire pour établir un accès au service de transmission de données. Le paramètre (par ID) identifiant l'utilisateur est par exemple le numéro IMSI temporaire (Temporary Mobile Subscriber Identity pour le niveau GSM ou Packet Temporary Mobile Subscriber Identity pour le niveau 2G/3G). Le paramètre de connexion (par con) est notamment un paramètre APN identifiant un point d'accès du réseau. Le SGSN recherche un paramètre APN associé à l'utilisateur. Pour cela il interroge le registre HLR (Home Location Register) qui contient la liste des paramètres APN associés à l'utilisateur en fonction de son abonnement. Si cet APN est présent, le SGSN A autorise la création d'un contexte PDP (Packet Data Protocol) d'échange de données qui comprend par exemple le paramètre APN, le point d'accès au service réseau utilisé (NSAPI Network Service Access Point), la qualité de service négocié.

Le SGSN transmet alors une requête de création de contexte PDP au GGSN A incluant le paramètre APN associé à l'utilisateur. A la création du contexte PDP, les mêmes paramètres sont initialisés côté utilisateur et côté réseau. Le SGSN A et le GGSN A vont ensuite communiquer, à la base de données (RADIUS A), les différents paramètres (par exemple et de façon non limitative le contexte PDP, le PTMSI, le TLLI [Temporary Logical Link Identifier]) de l'utilisateur USER A qui ont permis la connexion au réseau. Dans une étape suivante (3), la base de données (RADIUS A) va collecter les données issues de ce contexte PDP qui comprennent par exemple les paramètres PTMSI, NSAPI, TLLI, TID (Tunnel IDentifier) et communiquer ces données au module métier (M ME A).

A partir des données contextuelles du réseau, comme par exemple et de façon non limitative, le contexte PDP, suivant une étape (4) un module métier (M ME A), en communication avec la base de données (RADIUS A), va calculer les 2 clefs de chiffrement publique et privée qui seront ensuite communiquées à la base de données (RADIUS A).

En parallèle, suivant une autre étape (5), le module métier (MM utilisateur USER A) présent sur le terminal (USER A) va extraire les données pertinentes comme l'IMSI, MSISDN (Mobile Station ISDNumber), le TIMSI, PTMSI de sa carte SIM (Subscriber Identity Module ou module d'identification de l'abonné) et calculer également les deux mêmes clefs publique et privée.

Une interface de programmation applicative (API ME A) métier du terminal (USER A) va ensuite (6) générer un message et le crypter à l'aide de la clef de chiffrement publique précédemment générée.

Ce message crypté est ensuite envoyé, par le terminal (User A) vers le module de messagerie (M Mess A), suivant une étape (7), à destination du terminal (User B).

Le message est ensuite traité par le module de messagerie (M Mess A).

Le problème qui se pose ici est que le message est chiffré avec la clef publique (CPu UA) du terminal (USER A). Le terminal (USER B) ne connaît pas le secret pour déchiffrer le message. Par contre, l'opérateur (Oper A) connaît le moyen de chiffrement du message pour l'utilisateur (USER B).

Le module de messagerie (M Mess A) va donc envoyer, suivant une étape (8), une requête vers la base de données (Radius A) du réseau A afin de récupérer la clef privée (CPr UA) du terminal (User A) générée par le module métier (MME A) de ce réseau.

Dans une étape suivante (9) le module de messagerie (M Mess A) déchiffre le message du terminal (USER A) avec la clef privée obtenue.

Selon une étape (10), le module de messagerie (M Mess A) va ensuite extraire un contexte des échanges avec le terminal (User B). Une clef privée (CPr UB) et une clef publique (CPu UB) sont générées au niveau du réseau et au niveau du terminal (USER B). Le module de messagerie (M Mess A) va ensuite chiffrer de nouveau le message du terminal (USER A) avec la clef publique (CPu UB) du terminal (User B) et l'envoyer au destinataire (USER B) selon une étape (11).

Selon une étape (12), le message de (USER A) chiffré avec la clef publique de (User B) est reçu par le terminal (USER B). Ce dernier va déchiffrer le message avec sa clef privée (CPr UB) suivant une dernière étape (13) à l'aide de l'applicatif (API ME B) métier présent dans le terminal (USER B). De façon avantageuse, les étapes de génération (3, 5) de clefs publique et privée pourraient comprendre un enrichissement desdites clefs de chiffrement par au moins un certificat métier (certificat logiciel).

De façon avantageuse, les clefs de chiffrement pourraient également être enrichies à l'aide d'autres paramètres pertinents comme par exemple le profil de l'utilisateur (par exemple avec des informations sur l'utilisateur fournies lors de la souscription au service) ou un profil de service qui serait demandé à la base de données (RADIUS A) par le module métier (M ME A).

On obtient ainsi un procédé d'échange de messages tout à fait sécurisés. Tout ceci repose sur le fait qu'à chaque connexion un contexte réseau unique est créé et que ce contexte est utilisé pour établir les clefs de chiffrement. De plus côté utilisateur et côté réseau on possède le même algorithme pour calculer les clefs de chiffrement. Côté utilisateur l'algorithme est inclus dans la carte SIM et côté réseau, le registre HLR. De ce fait, le "secret" est partagé entre l'utilisateur et le réseau dès la souscription de l'abonnement et il n'y aucun échange de ce "secret" entre le réseau et l'utilisateur.

On obtient ainsi un système de chiffrement asymétrique à clef publique pour le chiffrement et clef privée pour le déchiffrement dans lequel le secret est partagé dès l'achat de la carte SIM. Le système est d'autant plus sécurisé que lors de l'achat, cette carte SIM n'est délivrée qu'après vérification de l'identité du souscripteur.

Ceci permet de mettre en place un service très souple ne nécessitant pas l'utilisation d'un identifiant et d'un mot de passe.

Un autre avantage de ce système est l'identifiant temporaire (TIMSI, PTMSI) qui permet d'éviter, à un terminal mobile, de voir son identifiant IMSI divulgué sur le réseau. Cet identifiant temporaire est recalculé à chaque changement de cellule ou changement de contexte. De ce fait, même si cet identifiant venait à être intercepté, il ne pourrait pas resservir pour la suite. On a ainsi un secret versatile.

Nous allons maintenant nous intéresser au cas de figure où les utilisateurs (USER A) et (USER B) appartiennent à des opérateurs différents (Oper A, Oper B).

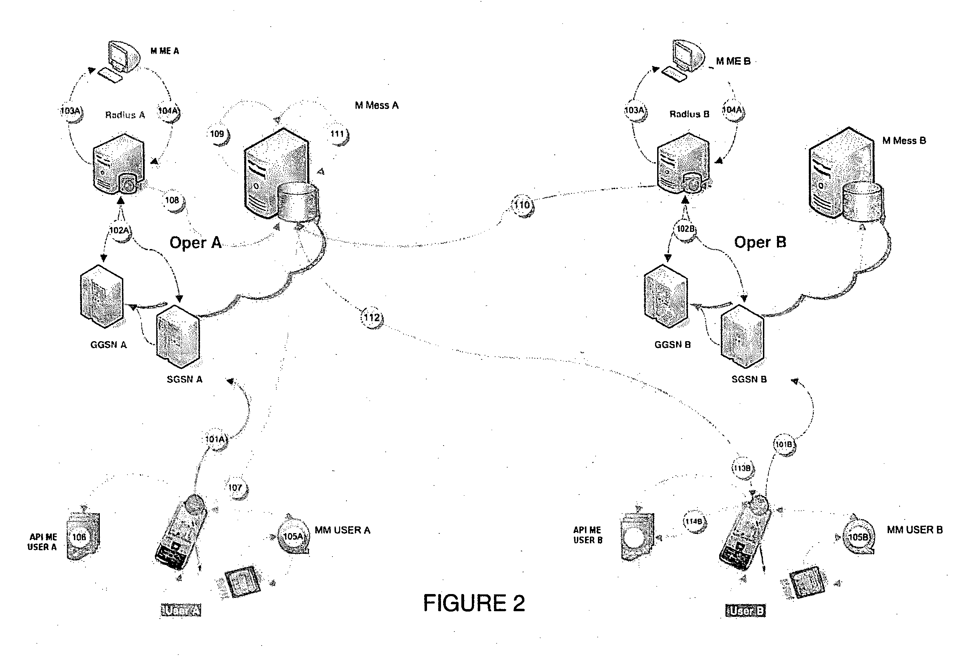

La figure 2 présente un réseau de télécommunication cellulaire 2G/3G, appartenant à des opérateurs différents (Oper A, Oper B), comprenant par exemple au moins :
- des passerelles (GGSN A et SGSN A) appartenant à l'opérateur (Oper A) ainsi que des passerelles (GGSN B et SGSN B) appartenant à l'opérateur (Oper B)
- une base de données (RADIUS A) appartenant à l'opérateur (Oper A) et une base de données (RADIUS B) appartenant à l'opérateur (Oper B)
- un module métier (M ME A) apte à dialoguer avec la base de données (RADIUS A) et un module métier (M ME B) apte à dialoguer avec la base de données (RADIUS B),
- un module de messagerie (M Mess A) appartenant au réseau de l'opérateur (Oper A) et un module de messagerie (M Mess B) appartenant au réseau de l'opérateur (Oper B).

Le procédé d'échange de messages sécurisés dans le cas d'un échange de messages entre deux opérateurs différents comprend plusieurs étapes.

En se référant à la figure 2, une première étape (101A) établit un contexte d'échange de données (contexte PDP) entre le terminal mobile (USER A) et le réseau à travers les passerelles (SGSN A) et (GGSN A).

Selon une étape suivante (102A), les passerelles (SGSN A) et (GGSN A) communiquent les données liées au contexte réseau et services demandés (contexte PDP, TLLI, PTMSI User A) à la base de données (RADIUS A). Dans une étape suivante (103A), la base de données (RADIUS A) va communiquer le contexte réseau au module métier (MME A).

A partir des données contextuelles du réseau, suivant une étape (104A) le module métier (MM A) va calculer les 2 clefs de chiffrement publique (CPu UA) et privée (CPr UA) qui seront ensuite communiquées à la base de données (RADIUS A).

En parallèle, suivant une autre étape(105A) le module métier (MM utilisateur USER A) présent sur le terminal (USER A) va extraire les données pertinentes comme l'IMSI, MSISDN, le TIMSI, PTMSI et autres données pertinentes métiers de sa carte SIM et calculer également les deux mêmes clefs publique et privée (CPu UA, CPr UA).

Une interface de programmation applicative (API ME A) métier du terminal (USER A) va ensuite (106A) générer un message et le crypter à l'aide de la clef de chiffrement publique (CPu UA) précédemment générée.

Ce message crypté est ensuite envoyé, par le terminal (User A) via le module de messagerie (M Mess A) du réseau A, suivant une étape (107), à destination du terminal (User B).

Le message est ensuite traité par le module de messagerie (M Mess A).

A cette étape, le message présent dans la messagerie de l'opérateur (Oper A) est chiffré avec la clef publique (CPu UA) du terminal (USER A). Le terminal destinataire est le terminal (USER B) qui ne connaît pas le secret pour déchiffrer ce message. De plus, l'opérateur (Oper A) ne connaît pas le moyen de chiffrement du message pour l'utilisateur (USER B).

Dans un premier temps, le module de messagerie (M Mess A) du réseau A va envoyer, suivant une étape (108), une requête vers la base de données du réseau A (Radius A) afin de récupérer la clef privée (CPr UA) du terminal (User A) générée par le module métier (MME A).

Dans une étape suivante (109) le module de messagerie (M Mess A) déchiffre le message du terminal (USER A) avec la clef privée (CPr UA). Dans un deuxième temps, selon une étape (110), le module de messagerie (M Mess A) va interroger la base de données (RADIUS B) de l'opérateur (Oper B) afin de récupérer la clef de chiffrement publique (CPr UB) du terminal (USER B).

Suivant une étape (101 B) un contexte d'échange de données entre le terminal mobile (USER B) et le réseau du second opérateur (OPER B) à travers les passerelles (SGSN B) et (GGSN B) est établi.

Selon une étape suivante (102B), les passerelles (SGSN B) et (GGSN B) communiquent les données liées au contexte réseau et services demandés par le terminal (USER B) (contexte PDP, TLLI, PTMSI User B) à la base de données (RADIUS B).

Dans une étape suivante (103B), la base de données (RADIUS B) va communiquer le contexte réseau au module métier (MME B).

A partir des données contextuelles du réseau, suivant une étape (104B) le module métier (MM B) va calculer les 2 clefs de chiffrement publique et privée (CPu UB, CPr UB) qui seront ensuite communiquées à la base de données RADIUS B).

En parallèle, suivant une autre étape (105B) le module métier (MM utilisateur USER B) présent sur le terminal (USER B) va extraire les données pertinentes comme l'IMSI, MSISDN, le TIMSI, PTMSI et autres données pertinentes métiers de sa carte SIM et calculer également les deux mêmes clefs publique et privée (CPu UB, CPr UB).

Selon une étape (110), la base de données (RADIUS B) transmet la clef publique (CPu UB) générée par le module métier (MME B).

Le module de messagerie (M Mess A) va ensuite chiffrer de nouveau le message du terminal (USER A) avec la clef publique du terminal (User B) et l'envoyer au destinataire (USER B) selon une étape (111).

Selon une étape (112), le message de (USER A) chiffré avec la clef publique (CPu UB) de (User B) est reçu par le terminal (USER B). Ce dernier va déchiffrer le message avec sa clef privée (CPr UB) suivant une dernière étape (113) à l'aide de l'applicatif (API ME B) métier présent dans le terminal (USER B).

De façon avantageuse, les étapes de génération de clefs publique et privée (104A, 104B, 105A, 105B) pourraient comprendre un enrichissement desdites clefs de chiffrement par au moins un certificat métier, par le profil de l'utilisateur (par exemple avec des informations sur l'utilisateur utilisées lors de la souscription au service) ou par exemple un profil de service qui serait demandé à la base de données (RADIUS A) par le module métier (M ME A).

Un autre objectif de la présente invention est de présenter un terminal permettant d'envoyer et de recevoir des messages sécurisés.

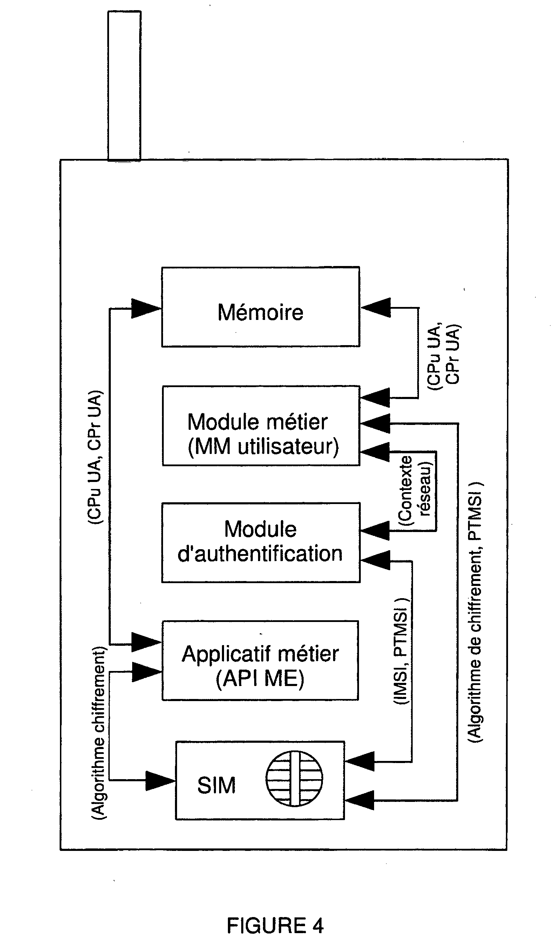

La figure 4 représente, de façon non limitative, un exemple de réalisation d'un terminal selon la présente invention.

De façon non limitative, le terminal d'un utilisateur USER A possède au moins une carte SIM, un module d'authentification et un algorithme d'authentification, un applicatif métier (API ME USER A) et un algorithme de chiffrement/déchiffrement, un module métier (MM utilisateur USER A) et une zone mémoire.

La carte SIM contient, entre autres, les paramètres d'identification de l'abonné ou du terminal (comme par exemple les paramètres IMSI, MSISDN, IMEI, clef Ki...) ainsi que des algorithmes de chiffrement (comme par exemple les algorithmes A3 ou A8).

Le module d'authentification est apte à dialoguer avec les passerelles SGSN pour, entre autres, se connecter au réseau ou établir un contexte PDP. Ce module est en communication avec la carte SIM et est apte à extraire, de ladite carte SIM, les paramètres d'authentification de l'abonné. Il est également apte à recevoir des paramètres du réseau comme par exemple le TMSI, PTMSI et à les stocker par exemple sur la carte SIM.

Le module métier (MM utilisateur USER A), présent sur le terminal d'un utilisateur USER A, a pour fonction de générer les couples de clefs publiques et privées (CPu UA, CPr UA) à partir des données contextuelles et d'un algorithme de chiffrement présent dans la carte SIM. Eventuellement, et de façon avantageuse, le module métier peut également enrichir le couple de clefs publique et privée avec d'autre donnés pertinentes telles que par exemple au moins un certificat métier par exemple présent dans une zone mémoire, des données liées au profil de l'utilisateur par exemple extraites de la carte SIM ou par exemple un algorithme dédié également présent sur le réseau de l'opérateur auquel est rattaché le terminal USER A. Une fois les clefs privée et publique (CPu UA, CPr UA) générées, le module métier (MM utilisateur USER A) les délivre à l'applicatif métier (API ME USER A) ou, de façon préférentielle, stocke ce couple par exemple dans une zone mémoire dédiée.

L'applicatif métier (API ME USER A) a pour fonction de générer et chiffrer les messages à envoyer. Il a également pour fonction de déchiffrer les messages reçus. Pour cela, ce module est apte à communiquer avec la zone mémoire dédiée au stockage des clefs de chiffrement et à extraire lesdites clefs de chiffrement. Il est également apte à communiquer avec la zone mémoire dédiée au stockage de l'algorithme de chiffrement et à extraire ledit algorithme.

Le terminal peut également posséder une option permettant de chiffrer ou non les messages à envoyer. Cette option peut se traduire, par exemple, au début ou à la fin de la frappe du message par une commande invitant l'utilisateur à choisir s'il faut chiffrer le message à envoyer.

Un autre objectif de la présente invention est de présenter un équipement informatique de gestion de messages sécurisés d'un réseau de télécommunication cellulaire 2G/3G.

De façon non limitative, cet équipement comprend un module de messagerie (M Mess), une base de données (RADIUS) et un module métier (M ME).

La base de données (RADIUS) stocke les paramètres de contexte réseau comme par exemple et de façon non limitative, le contexte PDP, TLLI, PTMSI ainsi que les clefs de chiffrement publique et privée. Eventuellement, et de façon avantageuse, elle peut également stoker des données relatives au profil de l'utilisateur (par exemple des informations sur l'utilisateur utilisées lors de la souscription au service).

Le module de messagerie a pour principale tâche l'envoi ainsi que le décryptage les messages. Ce module de messagerie est en communication avec la base de données (RADIUS) et permet d'envoyer des requêtes à ladite base de données de façon à obtenir les clefs de chiffrement publique et privée.

Le module métier (M ME) permet d'extraire les données pertinentes du contexte réseau comme par exemple le PTMSI, MSISDN, TMSI et de générer à partir de ces paramètres les clefs de chiffrement publique et privée.

Eventuellement, et de façon avantageuse, le module métier (M ME) peut enrichir les données extraites du contexte réseau avec d'autres données comme par exemple des certificats métier, le profil de l'utilisateur ou un profil de service qui serait demandé à la base de données (RADIUS).

Une fois le couple de clefs de chiffrement émis, il est transmis à la base de données (RADIUS) afin de le stocker.

Eventuellement, la base de données (RADIUS) et le module métier (M ME) peuvent être intégrés dans le module de messagerie.

Selon un autre mode de réalisation le module métier est intégré dans la base de données (RADIUS).

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes et l'invention ne doit pas être limitée aux détails donnés ci-dessus.

## Revendications

1. Procédé d'échange de messages sécurisés entre au moins deux terminaux (USER A, USER B) capable de communiquer avec un réseau de télécommunication cellulaire 2G/3G appartenant à au moins deux opérateurs (Oper A, Oper B), lesdits terminaux (USER A, USER B) comprenant chacun un module métier (MM utilisateur USER A, MM utilisateur USER B) apte à gérer et générer des clefs publique et privée, ledit réseau de télécommunication cellulaire 2G/3G comprenant deux modules de messagerie (M Mess A, M Mess B) appartenant chacun à un opérateur (Oper A, Oper B), deux modules métier (MME A, MME B) aptes à gérer et générer des clefs publique et privée, le procédé étant **caractérisé en ce qu'**il comporte :
a) une étape de génération de clefs de chiffrement publique et privée (CPu UA, CPR UA) à partir des données du contexte PDP extraites par le module métier (MM utilisateur USER A) du réseau auquel est connecté le premier utilisateur du terminal (USER A),
b) une étape de génération de mêmes clefs de chiffrement publique et privée (CPu UA, CPR UA) à partir des donnés du contexte PDP extraites par le module métier (MM utilisateur A) de l'opérateur (OPER A) et de transmission de la clef publique (CPu UA) au module messagerie (M Mess B) de l'opérateur B,
c) une étape de génération de clefs de chiffrement publique et privée (CPu UB, CPR UB) à partir des données du contexte PDP extraites par le module métier (MM utilisateur USER B) du réseau auquel est connecté le second utilisateur du terminal (USER B),
d) une étape de génération de mêmes clefs de chiffrement publique et privée (CPu UB, CPR UB) à partir des données du contexte PDP extraites par le module métier (MME B) de l'opérateur (OPER B) et de transmission de la clef publique (CPu UB) au module messagerie (M Mess A) de l'opérateur A,
e) une étape de chiffrement du message par le terminal (USER A) avec la clef de chiffrement publique générée à l'étape a)
f) une étape de déchiffrement du message par le module de messagerie (M Mess A) de l'opérateur (Oper A) avec la clef de chiffrement privé du module métier (MME A) générée à l'étape b)
g) une étape de chiffrement du message par le module de messagerie (M Mess A) de l'opérateur (Oper A) avec la clef de chiffrement publique du module métier (MM B)
h) une étape de déchiffrement du message par le terminal (USER B) avec sa clef de chiffrement privée.

2. Procédé selon la revendication 1, **caractérisé en ce que** le réseau de télécommunication cellulaire 2G/3G appartient au même opérateur, le module métier (MME B) est supprimé, l'étape de génération de clefs de chiffrement publique et privée (CPu UB, CPR UB) à partir des données du contexte PDP par le module métier (MM utilisateur USER B) du terminal (USER B) est supprimée.

3. Procédé selon une des revendications 1 et 2, **caractérisé en ce que** les étapes de génération des clefs publiques et clefs privées comprennent un enrichissement desdites clefs par au moins un certificat métier

4. Procédé selon une des revendications 1 à 3, **caractérisé en ce que** les étapes de génération des clefs publiques et clefs privées comprennent un enrichissement desdites clefs par le profil de l'utilisateur.

5. Procédé selon une des revendications 1 à 4, **caractérisé en ce que** les étapes de génération des clefs publiques et clefs privées comprennent un enrichissement desdites clefs par le profil de service.

6. Terminal comprenant une carte SIM, au moins un espace mémoire et un module d'authentification en communication avec la carte SIM et le réseau de télécommunication cellulaire 2G/3G, ledit module d'authentification étant capable d'établir une session avec le réseau de télécommunication cellulaire 2G/3G, ledit terminal étant apte à communiquer avec un réseau de télécommunication cellulaire 2G/3G et à envoyer des messages sécurisés vers au moins un autre terminal, ledit terminal étant **caractérisé en ce qu'**il comprend :
- un module métier en communication avec le module d'authentification, la carte SIM et l'espace mémoire capable de générer des clefs publique et privée (CPu, CPr) à partir des données contenues dans la carte SIM et de les stocker dans la zone mémoire,
- un applicatif métier (API ME) de gestion de la messagerie sécurisé en communication avec la carte SIM et la zone mémoire, capable de générer un message, de lire les clefs de chiffrement publique et privée (CPu, CPr) dans ladite zone mémoire et de chiffrer ledit message avec ladite clef publique ou de déchiffrer ledit message avec ladite clef privée de chiffrement

7. Terminal selon la revendication 6 **caractérisé en ce que** le module métier (MM utilisateur) enrichit les clefs de chiffrement avec au moins un certificat métier.

8. Terminal selon la revendication 6 ou 7 **caractérisé en ce que** le module métier (MM utilisateur) enrichit les clefs de chiffrement avec le profil de l'utilisateur.

9. Terminal selon la revendication une des revendications 6 à 8 **caractérisé en ce que** le module métier (MM utilisateur) enrichit les clefs de chiffrement avec un profil de service.

10. Equipement informatique de gestion de messages sécurisés d'un réseau de télécommunication cellulaire 2G/3G comprenant un module de messagerie (M Mess), une base de donnés (RADIUS) et un module métier (M ME), ladite base de donnée (RADIUS) étant en communication avec ledit module de messagerie et le module métier (M ME), ledit équipement informatique étant **caractérisé en ce que** :
- le module métier (M Me) permet d'extraire du contexte réseau fourni par la base de données (RADIUS) les données permettant de générer des clefs publique et privée puis de communiquer lesdites clefs publique et privée à ladite base de données (RADIUS),
- **en ce que** le module de messagerie (M Mess) permet d'envoyer une requête demandant les clefs de chiffrement publique et privée à la base de données (RADIUS)
- et **en ce que** le module de messagerie (M Mess) permet de chiffrer et déchiffrer les messages à envoyer avec les clefs de chiffrement fournies par la base de données (RADIUS)

11. Equipement informatique de gestion de messages sécurisés d'un réseau de télécommunication cellulaire 2G/3G selon la revendication 10 **caractérisé en ce que** le module métier (M ME) est intégré à la base de données (RADIUS).

12. Equipement informatique de gestion de messages sécurisés d'un réseau de télécommunication cellulaire 2G/3G selon la revendication 10 ou 11 **caractérisé en ce que** la base de données (RADIUS) est intégrée au module de messagerie (M Mess).

13. Equipement informatique de gestion de messages sécurisés d'un réseau de télécommunication cellulaire 2G/3G selon une des revendications 10 à 12 **caractérisé en ce que** le module métier (M ME) enrichit les données issues du contexte réseau avec au moins un certificat métier.

14. Equipement informatique de gestion de messages sécurisées d'un réseau de télécommunication cellulaire 2G/3G selon une des revendications 10 à 13 **caractérisé en ce que** le module métier (M ME) enrichit les données issues du contexte réseau avec le profil de l'utilisateur.

15. Equipement informatique de gestion de messages sécurisés d'un réseau de télécommunication cellulaire 2G/3G selon une des revendications 10 à 14 **caractérisé en ce que** le module métier (M ME) enrichit les données issues du contexte réseau avec un profil de service.

## Patentansprüche

1. Verfahren zum Austauschen von gesicherten Nachrichten zwischen mindestens zwei Endgeräten (USER A, USER B), die in der Lage sind, mit einem zellulären 2G/3G-Telekommunikationsnetzwerk zu kommunizieren, das zu mindestens zwei Betreibern (Oper A, Oper B) gehört, wobei die Endgeräte (USER A, USER B) jeweils ein Geschäftsmodul (MM Benutzer USER A, MM Benutzer USER B) aufweisen, das in der Lage ist, einen öffentlichen und einen privaten Schlüssel zu verwalten und zu erzeugen, wobei das zelluläre 2G/3G-Telekommunikationsnetzwerk aufweist: zwei Nachrichtendienstmodule (M Mess A, M Mess B), die jeweils zu einem Betreiber (Oper A, Oper B) gehören, zwei Geschäftsmodule (MME A, MME B), die in der Lage sind, einen öffentlichen und einen privaten Schlüssel zu verwalten und zu erzeugen, wobei das Verfahren **dadurch gekennzeichnet ist, dass** es aufweist:
a) einen Schritt zum Erzeugen von Schlüsseln mit öffentlicher und privater Verschlüsselung (CPu UA, CRP UA) aus den Daten des PDP-Kontextes, die mittels des Geschäftsmoduls (MM Benutzer USER A) des Netzwerks, das mit dem ersten Benutzer des Endgerätes (USER A) verbunden ist, abgefragt werden,
b) einen Schritt zum Erzeugen von gleichen Schlüsseln mit öffentlicher und privater Verschlüsselung (CPu UA, CPR UA) aus den Daten des PDP-Kontextes, die mittels des Geschäftsmoduls (MM Benutzer A) des Betreibers (OPER A) abgefragt werden, und zum Übermitteln des öffentlichen Schlüssels (CPu UA) an das Nachrichtendienstmodul (M Mess B) des Betreibers B,
c) einen Schritt zum Erzeugen von Schlüsseln mit öffentlicher und privater Verschlüsselung (CPu UB, CPR UB) aus den Daten des PDP-Kontextes, die mittels des Geschäftsmoduls (MM Benutzer USER B) des Netzwerks abgefragt werden, mit dem der zweite Benutzer des Endgerätes (USER B) verbunden ist,
d) einen Schritt zum Erzeugen von gleichen Schlüsseln mit öffentlicher und privater Verschlüsselung (CPu UB, CPR UB) aus den Daten des PDP-Kontextes, die mittels des Geschäftsmoduls (MME B) des Betreibers (OPER B) abgefragt werden, und zum Übermitteln des öffentlichen Schlüssels (CPu UB) an das Nachrichtendienstmodul (M Mess A) des Betreibers A,
e) einen Schritt zum Verschlüsseln der Nachricht durch das Endgerät (USER A) mit dem in Schritt a) erzeugten Schlüssel mit öffentlicher Verschlüsselung,
f) einen Schritt zum Entschlüsseln der Nachricht durch das Nachrichtendienstmodul (M Mess A) des Betreibers (Oper A) mit dem in Schritt b) erzeugten Schlüssel mit privater Verschlüsselung des Geschäftsmoduls (MME A),
g) einen Schritt zum Verschlüsseln der Nachricht durch das Nachrichtendienstmodul (M Mess A) des Betreibers (Oper A) mit dem Schlüssel mit öffentlicher Verschlüsselung des Geschäftsmoduls (MM B),
h) einen Schritt zum Entschlüsseln der Nachricht durch das Endgerät (USER B) mit seinem Schlüssel mit privater Verschlüsselung.

2. Verfahren gemäß Anspruch 1, **dadurch gekennzeichnet, dass** das zelluläre 2G/3G-Telekommunikationsnetzwerk zu demselben Betreiber gehört, das Geschäftsmodul (MME B) unterdrückt wird, und der Schritt zum Erzeugen von Schlüsseln mit öffentlicher und privater Verschlüsselung (CPu UB, CPR UP) aus den Daten des PDP-Kontextes durch das Geschäftsmodul (MM Benutzer USER B) des Endgerätes (USER B) unterdrückt wird.

3. Verfahren gemäß einem der Ansprüche 1 und 2, **dadurch gekennzeichnet, dass** die Schritte zum Erzeugen der öffentlichen Schlüssel und der privaten Schlüssel ein Erweitern der Schlüssel um mindestens ein Geschäftszertifikat aufweisen.

4. Verfahren gemäß einem der Ansprüche 1 bis 3, **dadurch gekennzeichnet, dass** die Schritte zum Erzeugen der öffentlichen Schlüssel und der privaten Schlüssel ein Erweitern der Schlüssel durch das Profil des Benutzers aufweisen.

5. Verfahren gemäß einem der Ansprüche 1 bis 4, **dadurch gekennzeichnet, dass** die Schritte zum Erzeugen der öffentlichen Schlüssel und der privaten Schlüssel ein Erweitern der Schlüssel um das Dienstprofil aufweisen.

6. Endgerät, aufweisend eine SIM-Karte, mindestens einen Speicherplatz und ein Authentifizierungsmodul, das mit der SIM-Karte und dem zellulären 2G/3G-Telekommunikationsnetzwerk kommuniziert, wobei das Authentifizierungsmodul in der Lage ist, eine Sitzung mit dem zellulären 2G/3G-Telekommunikationsnetzwerk herzustellen, wobei das Endgerät in der Lage ist, mit einem zellulären 2G/3G-Telekommunikationsnetzwerk zu kommunizieren und gesicherte Nachrichten an mindestens ein anderes Endgerät zu versenden, wobei das Endgerät **dadurch gekennzeichnet ist, dass** es aufweist:
- ein Geschäftsmodul, das mit dem
Authentifizierungsmodul kommuniziert, wobei die SIM-Karte und der Speicherplatz in der Lage sind, einen öffentlichen und einen privaten Schlüssel (CPu, CPr) aus den Daten zu erzeugen, die in der SIM-Karte enthalten sind, und diese in dem Speicherplatz zu speichern,
- eine Geschäftsanwendung (AP1 ME) zum Verwalten des gesicherten Nachrichtendienstes, die mit der SIM-Karte und dem Speicherplatz kommuniziert, die in der Lage ist, eine Nachricht zu erzeugen, die Schlüssel mit öffentlicher und privater Verschlüsselung (CPu, CPr) in dem Speicherplatz auszulesen und die Nachricht mit dem öffentlichen Schlüssel zu verschlüsseln oder die Nachricht mit dem privaten Verschlüsselungsschlüssel zu entschlüsseln.

7. Endgerät gemäß Anspruch 6, **dadurch gekennzeichnet, dass** das Geschäftsmodul (MM Benutzer) die Verschlüsselungsschlüssel um mindestens ein Geschäftszertifikat erweitert.

8. Endgerät gemäß Anspruch 6 oder 7, **dadurch gekennzeichnet, dass** das Geschäftsmodul (MM Benutzer) die Verschlüsselungsschlüssel um das Profil des Benutzers erweitert.

9. Endgerät gemäß einem der Ansprüche 6 bis 8, **dadurch gekennzeichnet, dass** das Geschäftsmodul (MM Benutzer) die Verschlüsselungsschlüssel um ein Dienstprofil erweitert.

10. Hardware zum Verwalten von gesicherten Nachrichten eines zellulären 2G/3G-Telekommunikationsnetzwerks, aufweisend ein Nachrichtendienstmodul (M Mess), eine Datenbank (RADIUS) und ein Geschäftsmodul (M ME), wobei die Datenbank (RADIUS) mit dem Nachrichtendienstmodul und dem Geschäftsmodul (M ME) kommuniziert, wobei die Hardware **dadurch gekennzeichnet ist, dass**:
- das Geschäftsmodul (M Me) ermöglicht, aus dem von der Datenbank (RADIUS) bereitgestellten Kontext die Daten abzufragen, die ein Erzeugen des öffentlichen und des privaten Schlüssels und ein anschließendes Kommunizieren des öffentlichen und des privaten Schlüssels an die Datenbank (RADIUS) ermöglichen,
- dass das Nachrichtendienstmodul (M Mess) ein Senden einer Anfrage zum Anfordern der Schlüssel mit öffentlicher und privater Verschlüsselung an die Datenbank (RADIUS) ermöglicht,
- und dass das Nachrichtendienstmodul (M Mess) ein Verschlüsseln und Entschlüsseln der Nachrichten ermöglicht, die mit den Verschlüsselungsschlüsseln zu versenden sind, die von der Datenbank (RADIUS) bereitgestellt werden.

11. Hardware zum Verwalten von gesicherten Nachrichten eines zellulären 2G/3G-Telekommunikationsnetzwerks gemäß Anspruch 10, **dadurch gekennzeichnet, dass** das Geschäftsmodul (M ME) in die Datenbank (RADIUS) integriert ist.

12. Hardware zum Verwalten von gesicherten Nachrichten eines zellulären 2G/3G-Telekommunikationsnetzwerks gemäß Anspruch 10 oder 11, **dadurch gekennzeichnet, dass** die Datenbank (RADIUS) in das Nachrichtendienstmodul (M Mess) integriert ist.

13. Hardware zum Verwalten von gesicherten Nachrichten eines 2G/3G-Telekommunikationsnetzwerks gemäß einem der Ansprüche 10 bis 12, **dadurch gekennzeichnet, dass** das Geschäftsmodul (M ME) die aus dem Netzwerkkontext stammenden Daten um mindestens ein Geschäftszertifikat erweitert.

14. Hardware zum Verwalten von gesicherten Nachrichten eines zellulären 2G/3G-Telekommunikationsnetzwerks gemäß einem der Ansprüche 10 bis 13, **dadurch gekennzeichnet, dass** das Geschäftsmodul (M ME) die aus dem Netzwerkkontext stammenden Daten um das Profil des Benutzers erweitert.

15. Hardware zum Verwalten von gesicherten Nachrichten eines zellulären 2G/3G-Telekommunikationsnetzwerks gemäß einem der Ansprüche 10 bis 14, **dadurch gekennzeichnet, dass** das Geschäftsmodul (M ME) die aus dem Netzwerkkontext stammenden Daten um ein Dienstprofil erweitert.

## Claims

1. Method for exchange of secure messages between at least two terminals (USER A, USER B) capable of communicating with a 2G/3G cellular telecommunications network belonging to at least two operators (Oper A, Oper B), said terminals (USER A, USER B) each comprising a trade module (MM user USER A, MM user USER B) capable of managing and generating public and private keys, said 2G/3G cellular telecommunications network comprising two messaging modules (M Mess A, M Mess B) each belonging to an operator (Oper A, Oper B), two trade modules (MME A, MME B) capable of managing and generating public and private keys, the method being **characterised in that** it comprises:
a) a step for generation of public and private encryption keys (CPu UA, CPR UA) from PDP contextual data extracted by the trade module (MM USER A) of the network to which the first user of the terminal (USER A) is connected,
b) a step for generation of the same public and private encryption keys (CPu UA, CPR UA) from the PDP contextual data extracted by the trade module (MM user A) of the operator (OPER A) and for transmission of the public key (CPu UA) to the messaging module (M Mess B) of the operator B,
c) a step for generation of public and private encryption keys (CPu UB, CPR UB) from the PDP contextual data extracted by the trade module (MM user USER B) of the network to which the second user of the terminal (USER B) is connected,
d) a step for generation of the same public and private encryption keys (CPu UB, CPR UB) from the PDP contextual data extracted by the trade module (MME B) of the operator (OPER B) and for transmission of the public key (CPu UB) to the messaging module (M Mess A) of the operator A,
e) a step for encryption of the message by the terminal (USER A) with the public encryption key generated in step a),
f) a step for decryption of the message by the messaging module (M Mess A) of the operator (Oper A) with the private encryption key of the trade module (MME A) generated in step b),
g) a step for encryption of the message by the messaging module (M Mess A) of the operator (Oper A) with the public encryption key of the trade module (MM B),
h) a step for decryption of the message by the terminal (USER B) with its private encryption key.

2. Method according to claim 1, **characterised in that** the 2G/3G cellular telecommunications network belongs to the same operator, the trade module (MME B) is suppressed, the step for generation of public and private encryption keys (CPu UB, CPR UB) from the PDP contextual data by the trade module (MM user USER B) of the terminal (USER B) is suppressed.

3. Method according to one of claims 1 and 2, **characterised in that** the steps for generation of the public keys and private keys comprise enrichment of said keys by at least one trade certificate.

4. Method according to one of claims 1 to 3, **characterised in that** the steps for generation of the public keys and private keys comprise enrichment of said keys by the profile of the user.

5. Method according to one of claims 1 to 4, **characterised in that** the steps for generation of the public keys and private keys comprise enrichment of said keys by the service profile.

6. Terminal comprising a SIM card, at least one memory space and a module for authentication in communication with the SIM card and the 2G/3G cellular telecommunications network, said authentication module being capable of establishing a session with the 2G/3G cellular telecommunications network, said terminal being capable of communicating with a 2G/3G cellular telecommunications network and of sending secure messages to at least one other terminal, said terminal being **characterised in that** it comprises:
- a trade module in communication with the authentication module, the SIM card and the memory space capable of generating public and private keys (CPu, CPr) from the data contained in the SIM card and of storing them in the memory zone,
- a trade application (API ME) for management of the secure messaging in communication with the SIM card and the memory zone, capable of generating a message, reading the public and private encryption keys (CPu, CPr) in said memory zone and of encrypting said message with said public key or decrypting said message with said private encryption key.

7. Terminal according to claim 6, **characterised in that** the trade module (MM user) enriches the encryption keys with at least one trade certificate.

8. Terminal according to claim 6 or 7, **characterised in that** the trade module (MM user) enriches the encryption keys with the profile of the user.

9. Terminal according to one of claims 6 to 8, **characterised in that** the trade module (MM user) enriches the encryption keys with a service profile.

10. Computer equipment for management of secure messages over a 2G/3G cellular telecommunications network comprising a messaging module (M Mess), a database (RADIUS) and a trade module (M ME), said database (RADIUS) being in communication with said messaging module and the trade module (M ME), said computer equipment being **characterised in that**:
- the trade module (M ME) allows extraction from the network context provided by the database (RADIUS) of the data permitting the generation of the public and private keys then communication of said public and private keys to said database (RADIUS),
- **in that** the messaging module (M Mess) allows the transmission of a request for the public and private encryption keys to the database (RADIUS),
- and **in that** the messaging module (M Mess) allows encryption and decryption of the messages to be sent with the encryption keys supplied by the database (RADIUS).

11. Computer equipment for management of secure messages over a 2G/3G cellular telecommunications network according to claim 10, **characterised in that** the trade module (M ME) is integrated in the database (RADIUS).

12. Computer equipment for management of secure messages over a 2G/3G cellular telecommunications network according to claim 10 or 11, **characterised in that** the database (RADIUS) is integrated in the messaging module (M Mess).

13. Computer equipment for management of secure messages over a 2G/3G cellular telecommunications network according to one of claims 10 to 12, **characterised in that** the trade module (M ME) enriches the data from the network context with at least one trade certificate.

14. Computer equipment for management of secure messages over a 2G/3G cellular telecommunications network according to one of claims 10 to 13, **characterised in that** the trade module (M ME) enriches the data from the network context with the profile of the user.

15. Computer equipment for management of secure messages over a 2G/3G cellular telecommunications network according to one of claims 10 to 14, **characterised in that** the trade module (M ME) enriches the data from the network context with a service profile.
